# EUROPÄISCHE PATENTANMELDUNG

(11) **EP 2 854 223 A1**
(43) Veröffentlichungstag der Anmeldung: **01.04.2015**
(21) Anmeldenummer: 14184627.9
(22) Anmeldetag: 12.09.2014
(51) Int. Cl.: H01R 4/48, H02B 1/21

(54) **Adapter zum Kontaktieren von Sammelschienen**

(30) Priorität: 30.09.2013 DE 102013110789
(71) Anmelder: Klaus Bruchmann GmbH, 4616 Weißkirchen an der Traun (AT)
(72) Erfinder: Bruchmann, Klaus, 96450 Coburg (DE)
(74) Vertreter: Appelt, Christian W.

(57) **Zusammenfassung**

Ein Adapter (200) zum Kontaletieren von Sammelschienen mit einem mehrpoligen Anschlusslcabel (300) umfasst folgende Merkmale: zumindest zwei Kontaktverbindungen (210) für zumindest zwei Sammelschienen; ein Gehäuse (205) mit Haltemittel (214, 216) und eine Kabelanschlusseinrichtung (100), die in dem Gehäuse (205) durch die Haltemittel (214, 216) fixiert ist. Das Gehäuse (205) umfasst zumindest zwei Öffnungen (201, 202), um durch jede der zumindest zwei Öffnungen (201, 202) jeweils einen Pol des mehrpoligen Anschlusskabels (300) aufzunehmen. Die Kabelanschlusseinrichtung (100) umfasst: einen Hebelschalter (110), eine Federklemmenstruktur (120) und eine Verbindungsstruktur (130). Der Hebelschalter (110) umfasst einem Hebelpunkt (P), auf dem beim Betätigen des Hebelschalters (110) eine Hebelkraft wirkt. Die Federklemmenstruktur (120) stellt zumindest eine Federkraft bereit, um nach einem Einsetzen des Anschlusskabels (300) jeweils einen elektrischen Kontakt zwischen einem der mehreren Pole (301, 302) und einer der zumindest zwei Kontaktverbindungen (210) durch die Federkraft herzustellen. Die Verbindungsstruktur (130) ist zwischen dem Hebelschalter (110) und der Federklemmenstructur (120) angeordnet und ausgebildet, um die Hebelkraft von dem Hebelschalter (110) auf die Federklemmenstruktur (120) zu übertragen und die Federklemmenstruktur (120) entgegen der Federkraft zu spannen, so dass durch ein einmaliges Betätigen des Hebelschalters (110) die mehreren Pole (301, 302) des Anschlusskabels (300) gleichzeitig in die Kabelanschlusseinrichtung (100) einführbar sind und bei einem Lösen des Hebelschalters (110) der jeweilige elektrische Kontakt zwischen den zumindest zwei Kontaktverbindungen (210) und den mehreren Polen (301, 302) aufgrund der Federkraft hergestellt ist.

## Beschreibung

Die vorliegende Erfindung bezieht sich auf einen Adapter zum Kontaktieren von Sammelschienen (Sammelschienen-Adapter) und insbesondere auf einen Adapter zum Kontaktieren von Sammelschienen mit einem mehrpoligen Anschlusskabel, wobei ein gleichzeitiges und gemeinsames Kontaktieren aller Pole (Leitungen) des mehrpoligen Anschlusskabels erreicht wird.

### Beschreibung

Sammelschienen-Adapter eignen sich insbesondere zur Befestigung von Sicherungssystemen, Schaltersicherungseinheiten, etc. aber auch für alle anderen elektrischen Installationsgeräte an elektrischen Sammelschienen-Systeme, die zur Stromversorgung dienen, wobei insbesondere 3-phasige Sammelschienen-Systeme genutzt werden.

Die Kontaktierung solcher Sammelschienen-Adapter erfolgt über ein mehrpoliges Anschlusskabel, die mehrere Leitungen (oder Pole) aufweisen. Beispielsweise weist ein dreiphasiges Anschlusskabel für jede Phase eine einzelne Leitung auf, wobei in konventionellen Systemen jede Leitung einzeln an dem entsprechenden Kabelanschluss befestigt wird. Beispielsweise sind dazu Schraub-, Löt- oder Schweißverbindung bisher genutzt worden, wie sie beispielsweise in der DE 10 2005 009 856 B4 offenbart sind.

Da in diesen Systemen jede Leitung einzeln an den Sammelschienen-Adapter zu befestigen ist, ist ein erhöhter Zeitaufwand erforderlich, um alle Leitungen entsprechend sicher zu befestigen. Ein weiterer Nachteil dieser konventionellen Systeme ist, dass ein Lösen der Kabel ebenso zeitaufwendig ist und dazu häufig entsprechendes Werkzeug erforderlich ist. Schraubverbindungen weisen ferner den Nachteil auf, dass sich solche Verbindungen mit der Zeit lösen können und somit eine sichere Verbindung über einen längeren Zeitraum häufig nicht sichergestellt werden kann.

Es ist daher die Aufgabe der vorliegenden Erfindung, einen Adapter zum Kontaktieren von Sammelschienen mit einem Anschlusskabel bereitzustellen, der ein einfaches, schnelles und sicheres Kontaktieren eines mehrpoligen Anschlusskabels an ein Sammelschienen-System ermöglicht.

Diese Aufgabe wird durch einen Adapter nach Anspruch 1 und ein Anschlusskabel nach Anspruch 12 gelöst. Die Ansprüche 2 bis 11 und 13 beziehen sich auf weitere vorteilhafte Ausführungsformen der vorliegenden Erfindung.

Gemäß der vorliegenden Erfindung umfasst ein Adapter zum Kontaktieren von Sammelschienen mit einem Anschlusskabel, wobei das Anschlusskabel zumindest zwei Pole (Leitungen) aufweist, folgende Merkmale: zumindest zwei Kontaktverbindungen für zumindest zwei Sammelschienen, ein Gehäuse, und eine Kabelanschlusseinrichtung, die in dem Gehäuse durch Haltemittel fixiert ist. Das Gehäuse umfasst die Haltemittel und zumindest zwei Öffnungen, um durch jede der zumindest zwei Öffnungen jeweils einen Pol des mehrpoligen Anschlusskabels aufzunehmen. Die Kabelanschlusseinrichtung umfasst: einen Hebelschalter, eine Federklemmenstruktur und eine Verbindungsstruktur. Der Hebelschalter umfasst einem Hebelpunkt, auf dem beim Betätigen des Hebelschalters eine Hebelkraft wirkt. Die Federklemmenstruktur stellt zumindest eine Federkraft bereit, um nach einem Einsetzen des Anschlusskabels jeweils einen elektrischen Kontakt zwischen einem der zumindest zwei Pole und einer der zumindest zwei Kontaktverbindungen durch die Federkraft herzustellen. Die Verbindungsstruktur ist zwischen dem Hebelschalter und der Federklemmenstruktur angeordnet und ausgebildet, um die Hebelkraft von dem Hebelschalter auf die Federklemmenstruktur zu übertragen und die Federklemmenstruktur entgegen der Federkraft zu spannen. Durch ein einmaliges Betätigen des Hebelschalters sind die zumindest zwei Pole des Anschlusskabels gleichzeitig in die Kabelanschlusseinrichtung einführbar und durch ein Lösen des Hebelschalters ist der jeweilige elektrische Kontakt zwischen den zumindest zwei Kontaktverbindungen und den zumindest zwei Polen aufgrund der Federkraft hergestellt.

Somit ist lediglich ein Hebelschalter erforderlich, um die zumindest zwei Pole des Anschlusskabels gleichzeitig in die Kabelanschlusseinrichtung einzuführen und durch ein Loslassen des Hebelschalters den elektrischen Kontakt der zumindest zwei Sammelschienen zu den zumindest zwei Polen aufgrund der Federkraft herzustellen.

Bei weiteren Ausführungsbeispielen ist optional die Verbindungsstruktur einteilig ausgebildet und weist zumindest zwei stabförmige Elemente auf, wobei die zumindest zwei stabförmigen Elemente ausgebildet sind, um beim Einwirken der Hebelkraft die Federklemmenstruktur zu kontaktieren und durch ein Übertragen der Hebelkraft zu spannen, so dass ein eingesetztes Anschlusskabel aus der Kabelanschlusseinrichtung herausziehbar ist.

Mit der einteiligen Form der Verbindungsstruktur wird erreicht, dass ein zuverlässiges Öffnen der Federklemmenstruktur durch ein einmaliges Betätigen des Hebelschalters ermöglicht wird, ohne dass eine Vielzahl von Teilen zu bewegen wäre.

Bei weiteren Ausführungsbeispielen umfasst der Hebelschalter einen Hebelarm zum Betätigen durch einen Nutzer und einen Abstützabschnitt, wobei der Hebelpunkt zwischen dem Hebelarm und dem Abstützabschnitt angeordnet ist und der Abstützabschnitt an die Haltemittel koppelt, um einen Drehpunkt zu definieren, so dass bei Betätigung des Hebelschalters durch den Nutzer die Hebelkraft an dem Hebelpunkt als Folge einer Drehung um den Drehpunkt wirkt. Außerdem kann optional der Hebelschalter eine stufenförmige Vertiefung aufweisen und die Haltemittel einen Vorsprung und ein Stützelement aufweisen. Das Stützelement, der Vorsprung und die stufenförmige Vertiefung sind beispielsweise ausgebildet, um durch die Federkraft den Hebelschalter mit der stufenförmigen Vertiefung gegen den Vorsprung und mit dem Abstützabschnitt gegen das Stützelement zu drücken, um so einen Anschlag für den Hebelschalter in dem Gehäuse zu bilden. Damit wird erreicht, dass einerseits der Hebelschalter in eine Einsetzrichtung des Kabels bewegbar ist, andererseits aber im Gehäuse durch den Anschlag fixiert ist und so einen festen Halt hat. Insbesondere wenn das Gehäuse zweiteilig ausgebildet ist, können somit die Haltemittel sicherstellen, dass bei einer Demontage des Gehäuses die Kontaktanschlusseinrichtung noch fest in zumindest einem Teil des Gehäuses fixiert bleibt. Beispielsweise weist nämlich das Gehäuse ein Unterdeck und ein abnehmbares Oberdeck auf, und die Haltemittel sind an dem Unterdeck ausgebildet. Das Unterdeck kann beispielsweise noch ein Zwischendeck aufweisen, an welchem die Haltemittel ausgebildet sind und das separat vom Unterdeck trennbar ist.

Der Begriff Gehäuse schließt alle Haltestrukturen oder Halterahmen ein, an denen die einzelnen Komponenten befestigt werden können, ohne notwendigerweise einen Sichtschutz, Staubschutz oder Feuchtigkeitsschutz zu bieten.

Optional können bei weiteren Ausführungsbeispielen die Federklemmenstruktur drei voneinander elektrisch isolierte Federklemmen aufweisen und die zumindest zwei stabförmigen Elemente drei stabförmige Element aufweisen, wovon jedes jeweils eine der drei Federklemmen kontaktiert, so dass ein 3-phasiges Anschlusskabel für alle Phasen gleichzeitig (z.B. in einem Arbeitsschritt) kontaktierbar ist.

Die Ausgestaltung des Hebelschalters mit einer entsprechenden Hebelwirkung weist den Vorteil auf, dass gleichzeitig alle Kontakte zwischen den Polen in dem Anschlusskabel und zu den entsprechenden Sammelschienen hergestellt werden können, da die Hebelkraft über den Hebelarm entsprechend eingestellt werden kann, so dass sie ausreicht, um alle Federklemmen gleichzeitig zu betätigen. Da die Federkraft oder die Kontaktwirkung der Federklemmen entsprechend hoch sein soll, so dass ein sicheres Kontaktieren zwischen dem Sammelschienen-Adapter und dem Anschlusskabel gewährleistet ist, ist es bei weiteren Ausführungsbeispielen vorteilhaft, die Länge des Hebelarmes derart zu wählen, dass die erreichbare Kraftwirkung an dem Hebelpunkt ausreicht, um die durch die Federklemmen entgegengesetzt wirkende Federkraft zu überwinden und ein einfaches Schalten des Hebelschalters durch einen Nutzer zu ermöglichen.

Beispielsweise stellt die Federklemmenstruktur eine Federkraft bereit, die ausreichend ist, um das Anschlusskabel in dem Adapter entgegen einer Zugkraft selbständig zu halten (z.B. kann die Zugkraft zumindest so hoch sein, wie die Gewichtskraft, die der Sammelschienen-Adapter aufgrund seines Gewichtes beim Anheben ausüben würde). Die Haltekraft zwischen der Federklemmenstruktur und den Polen des Anschlusskabels kann beispielsweise dadurch weiter erhöht werden, dass eine Oberfläche der Federklemmenstruktur und/oder einer gegenüber liegenden Andrückfläche der Kontaktverbindung für die Sammelschienen entsprechend aufgeraut ist, so dass eine erhöhte Reibung dafür sorgt, dass ein Herausgleiten der zumindest zwei Pole aus der Federklemmenstruktur unterdrückt bzw. verhindert wird.

Optional kann bei weiteren Ausführungsbeispielen die Federklemmenstruktur ausgebildet sein, um nach einem Einführen des Anschlusskabels, das Anschlusskabel zu verkeilen, um ein Herausziehen des Anschlusskabels aus der Kabelanschlusseinrichtung zu blockieren. Ein Verkeilen der einzelnen Leitungen des Anschlusskabels kann beispielsweise dadurch erleichtert werden, dass die Federklemmen (die z.B. als Blattfedern ausgebildet sein können) an ihren Enden, mit denen sie die zumindest zwei Pole des Anschlusskabels kontaktieren, Kanten aufweisen, die sich bei dem Anwenden einer Zugkraft auf das Anschlusskabel (entgegen der Einschubrichtung) in die entsprechende Leitung des Anschlusskabels hineindrücken und somit ein Herausziehen unmöglich machen. Außerdem kann die Länge der Blattfeder länger sein als der Abstand von gegenüberliegenden Schenkeln einer U-geformten Kontaktverbindung, so dass ein Herausklappen der Federklemmen bzw. der Blattfeder unmöglich ist, ohne dass eine Deformation der Blattfeder erfolgt. Dies hätte zur Folge, dass ein eingesetztes Kabel durch die Blattfeder nach dem Einsetzen eingeklemmt ist und ein einfaches Herausziehen unmöglich ist.

Bei weiteren Ausführungsbeispielen kann daher die Federklemmenstruktur jeweils eine Blattfeder und eine U-geformte Kontaktverbindung mit zwei Schenkel, die einander gegenüber liegen, aufweisen, wobei die Blattfeder an einem der Schenkel derart fixiert ist, dass die Federkraft zumindest teilweise in Richtung des anderen Schenkels wirkt, um die zumindest zwei Pole des Anschlusskabel durch die Blattfeder und den anderen Schenkel zu kontaktieren. Optional stellt beispielsweise die Blattfeder selbst einen Schenkel der U-geformten Kontaktverbindung dar. Die U-geformte Kontaktverbindung weist somit den Vorteil auf, dass durch die Kombination mit einer Blattfeder eine größere Verkeilwirkung erreichbar ist, so dass auch eine geringere Federkraft der Federklemmen ausreicht, um eine zuverlässige Fixierung des Anschlusskabels in dem Sammelschienen-Adapter zu gewährleisten.

Optional können bei weiteren Ausführungsbeispielen für den Sammelschienen-Adapter die zumindest zwei stabförmigen Elemente der Verbindungsstruktur drei stabförmige Elemente sein, und der Sammelschienen-Adapter kann weiter eine Führungsstruktur für die drei stabförmigen Elemente bereitstellen, so dass die drei stabförmigen Elemente bei einer Betätigung des Hebelschalters in die Einsetzrichtung des Anschlusskabels bewegbar sind.

Ausführungsbeispiele beziehen sich auch auf ein Anschlusskabel für einen zuvor beschriebenen Adapter, wobei das Anschlusskabel zumindest zwei Leitungen und einen Stecker aufweist und der Stecker ausgebildet ist, um die zumindest zwei Leitungen in einem vorbestimmten Abstand voneinander zu halten, wobei der vorbestimmte Abstand so gewählt ist, dass die zumindest zwei Leitungen in die Öffnungen des Adapters einführbar sind, und zwar ohne die Leitungen zu verbiegen.

Optional können bei weiteren Ausführungsbeispielen für das Anschlusskabel die zumindest zwei Leitungen drei Leitungen sein, die in einer Ebene angeordnet sind und der Stecker kann ausgebildet sein, um die drei Leitungen derart parallel in einer Ebene anzuordnen, dass zwei der drei Leitungen von einer dazwischenliegenden dritten Leitung einen annähernd gleichen Abstand aufweisen (d.h. sie ist mittig angeordnet).

Die Erfindung wird nachfolgend bezugnehmend auf die beiliegenden Figuren näher beschrieben, wobei:
Fig. 1A-1D Raumansichten einer Kabelanschlusseinrichtung eines Adapters gemäß einem Ausführungsbeispiel der vorliegenden Erfindung zeigen;
Fig. 2A, 2B zwei Raumansichten zeigen, die ein Verbinden eines mehrpoligen Anschlusskabels mit einem Adapter durch einen Stecker gemäß Ausführungsbeispielen veranschaulichen; und
Fig. 3A - 3J Querschnittsansichten des Adapters zeigen, in dem die Kabelanschlusseinrichtung gemäß Ausführungsbeispielen der vorliegenden Erfindung eingesetzt ist.

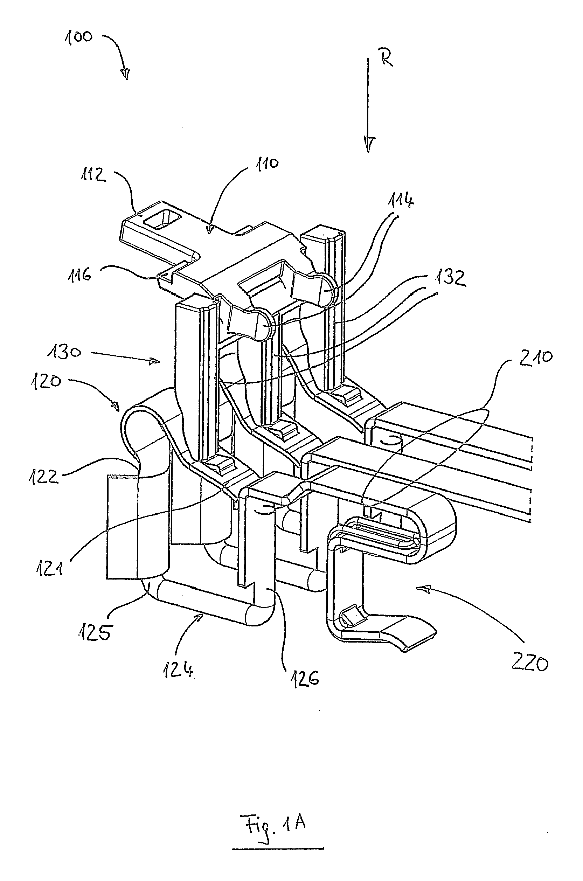

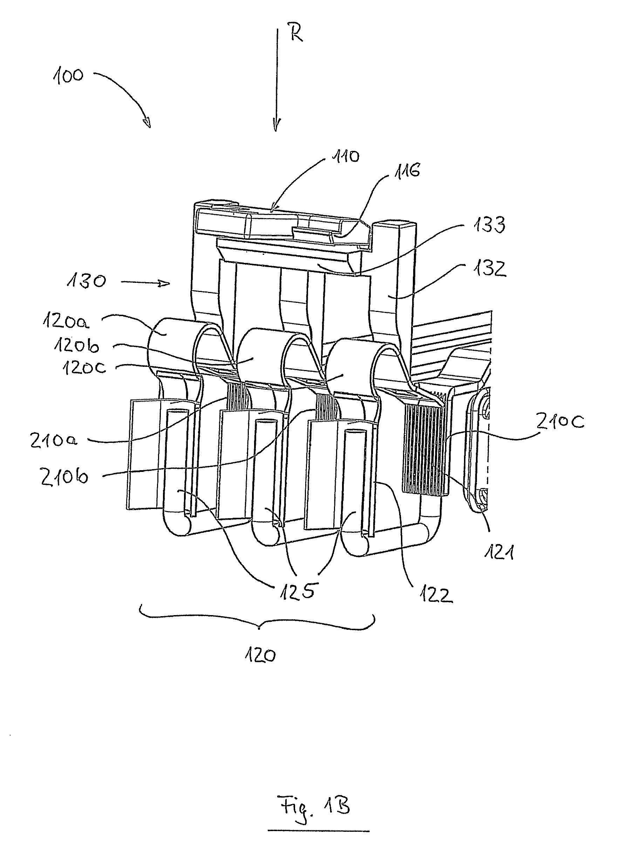

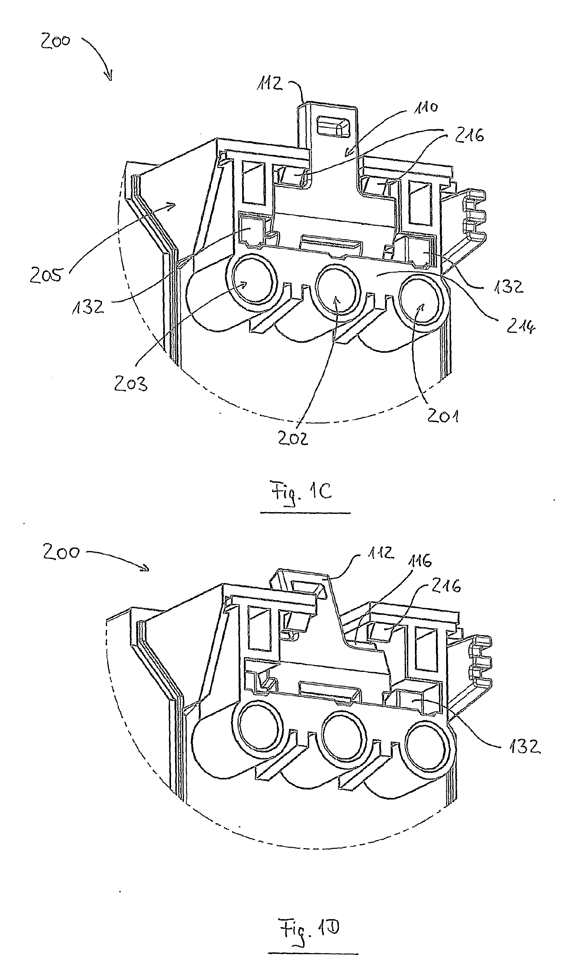

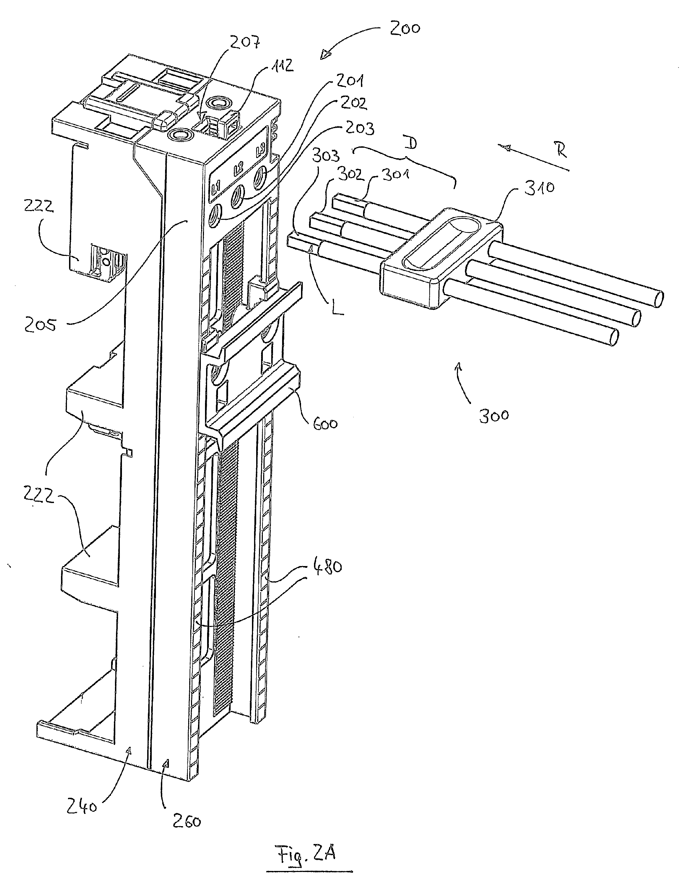

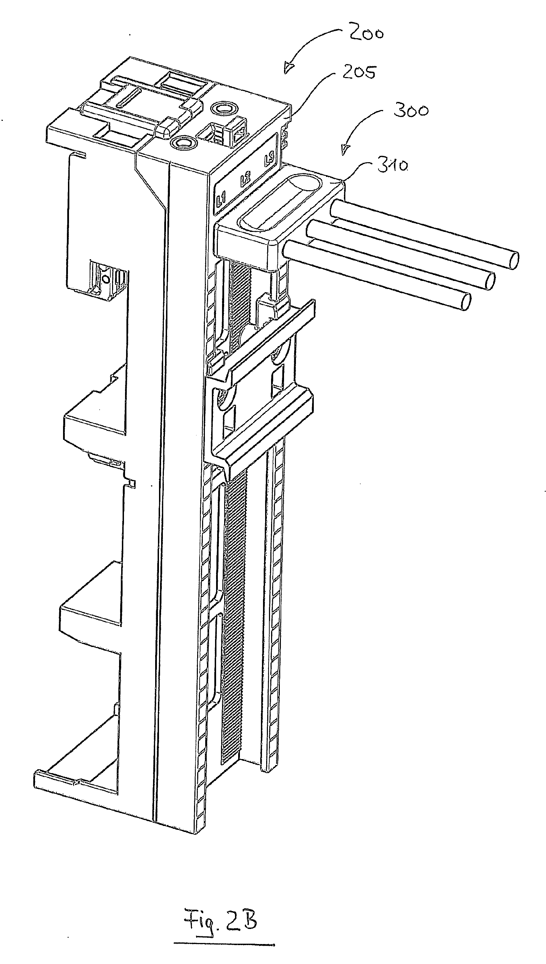

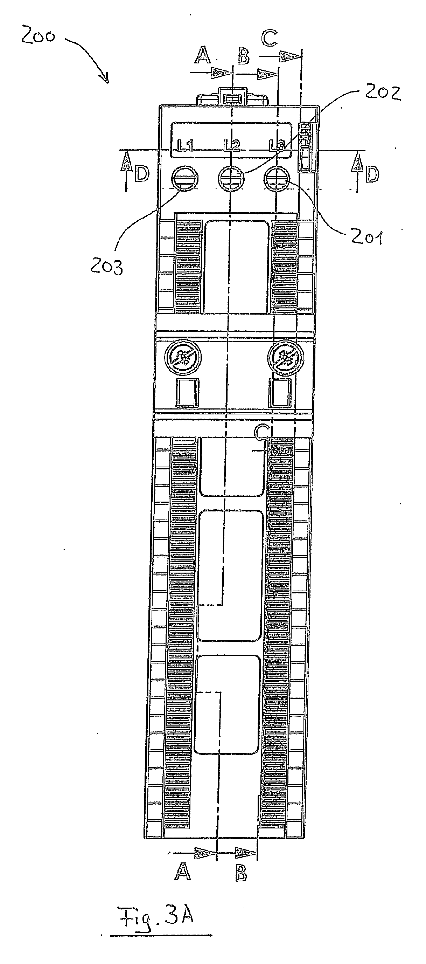

Die Figuren 1A und 1B zeigen eine Kabelanschlusseinrichtung 100, die in einem Adapter einsetzbar ist, und die Figuren 1C und 1D zeigen einen vergrößerten Ausschnitt des Adapters 200 mit eingesetzter Kabelanschlusseinrichtung 100. Das Anschlusskabel wird später mit den Fig. 2A und 2B näher beschrieben und weitere Einzelheiten des Adapters sind den Querschnittsansichten der Fig. 3A-3I zu entnehmen.

Die Kabelanschlusseinrichtung 100 weist einen Hebelschalter 110, eine Verbindungsstruktur 130 und in diesem Ausführungsbeispiel drei Federklemmen als Federklemmenstruktur 120 auf. Der Hebelschalter 110 weist einen Hebelarm 112 und gegenüberliegend eine Abstützstruktur oder einen Abstützabschnitt 114 auf, wobei zwischen dem Hebelarm 112 und der Abstützstruktur 114 ein Hebelpunkt P (der in der Fig. verdeckt ist) die Verbindungsstruktur 130 kontaktiert. Der Abstützabschnitt 114 dient beispielsweise als Drehpunkt für den Hebelarm 112, so dass der Abstützabschnitt 114 sich beim Betätigen des Hebelschalters 110 gegenüber einem Gehäuse dreht, nicht aber transversal verschoben wird.

Die Verbindungsstruktur 130, die beispielsweise einteilig ausgebildet ist, weist beispielsweise drei Abstützstäbe 132 (stabförmige Elemente oder Stößel) auf, die sich in einer Einführrichtung R (Einsetz- oder Einschubrichtung) des mehrpoligen Anschlusskabels erstrecken und an einem dem Hebelpunkt P gegenüberliegenden Ende jeweils eine der drei Federklemmen 120 kontaktieren. Die jeweils eine Federklemme 120 ist jeweils mit einem U-förmigen Verbindungsteil (U-geformten Kontaktverbindung) 124 verbunden. Das U-förmige Verbindungsteil 124 weist zwei gegenüber liegende Schenkel 125, 126 auf, wovon an einem Schenkel 125 die Federklemme 120 angeordnet ist und an dem anderen Schenkel 126 jeweils ein Ende einer Kontaktverbindung 210 für eine Sammelschiene befestigt ist. Der Hebelschalter 110 und/oder die Verbindungsstruktur 130 weisen vorzugsweise ein elektrisch isolierendes Material auf.

Der Hebelschalter 110 gemäß Ausführungsbeispielen der vorliegenden Erfindung weist ferner eine stufenförmige Vertiefung 116 auf, die einen oberen Anschlag für eine Bewegung entgegen der Einschubrichtung R bereitstellt, so dass der Hebelschalter 110 durch die Federkraft unter Spannung in dem Gehäuse (siehe Fig. 1C) gehalten werden kann.

Der gezeigte Hebelschalter 110 ist daher ausgebildet, um eine Hebelwirkung auszunutzen, die entlang eines Hebelarms entsteht, der sich an einem Stützpunkt abstützt (in der Fig. 1A nicht gezeigt) und eine Hebelkraft an dem Hebelpunkt erzeugt, wenn der Nutzer am Ende des Hebelarms 112 eine Kraft aufbringt. Mit der vorliegenden Erfindung ist es somit möglich, dass alle Kontakte zwischen dem Anschlusskabel und den Kontaktverbindungen 210 gleichzeitig oder in kurzen Abständen hintereinander, jedoch in einem Arbeitsschritt, herstellbar sind, so dass keine separate Kontaktierung der einzelnen Leitungen erforderlich ist. Der Nutzer kann somit durch ein einmaliges Betätigen des Hebelschalters 110 alle Leitungen des Anschlusskabels mit den entsprechenden Kontaktverbindungen 210 in dem Adapter kontaktieren und ebenso in einem einzigen Arbeitsschritt alle Leitungen des Anschlusskabels von den Kontaktverbindungen 210 und somit von den Sammelschienen trennen. Dazu sind keine mehrfachen Arbeitsschritte erforderlich, sondern nur ein einmaliges Betätigen des Hebelschalters 110.

Jede der drei Federklemmen 120 kann als Blattfeder mit einem Federarm 121 ausgebildet sein und stellt eine Federkraft bereit, die den Federarm 121 ganz oder teilweise hin zu dem anderen Schenkel 126 des U-förmigen Verbindungsteils 124 drückt, um so einen Kontakt bei einem Einschieben des mehrpoligen Anschlusskabels zwischen der jeweiligen Leitung des Anschlusskabels und der jeweiligen Kontaktverbindung 210 und der Stromschiene herzustellen.Diese drei Federklemmen 120 werden durch ein einmaliges Betätigen des Hebelschalters 110 gleichzeitig geöffnet (z.B. werden alle Federarme 121 über die stabförmigen Elemente 132 gleichzeitig in die Einschubrichtung R gedrückt).

Bei dem Ausführungsbeispiel, wie es in der Fig. 1A gezeigt ist, weist die Kabelanschlusseinrichtung 100 insgesamt drei Kontaktverbindungen 210 zu drei Stromschienen auf, die beispielsweise für einen dreiphasigen Stromanschluss geeignet sind. Die Stromschienen sind an einer Halterung 220 an einer Unterseite (in Einschubrichtung R) kontaktierbar und sind in der Fig. 1A nicht gezeigt. Außerdem können die Blattfedern auch zwei gegenüberliegende Blätter 121, 122 aufweisen, die entgegen der Federkraft zusammengedrückt werden können. Das Zusammendrücken kann beispielsweise durch das Ausüben einer Kraft auf den Hebelarm 112 des Hebelschalters 110 bewirkt werden, wobei die Kraft über die Verbindungsstruktur 130 (z.B. über die beispielhaften stabförmigen Elemente 132) weiter auf den Federarm 121 weiterleitet wird, um dort ein Verbiegen des Federarms 121 zu bewirken, wenn beispielsweise der Nutzer den Hebelschalter 110 betätigt.

Die Federkraft der Federklemmen 120 ist bspw. ausreichend stark gewählt, so dass ein selbständiges Lösen des Kontaktes des mehrpoligen Anschlusskabels zwischen dem Federarm 121 und dem anderen Schenkel 126 des U-förmigen Verbindungsteils 124 verhindert wird und ein sicherer Kontakt zwischen dem Anschlusskabel und dem Sammelschienen-Adapter erreicht wird. Vorteilhafterweise widersteht der Kontakt einer Zugkraft, die auf dem Anschlusskabel entgegengesetzt zu der Einschubrichtung R einwirkt, wobei die tolerierbare Zugkraft beispielsweise einer Kraft entspricht, die ein Nutzer bei einem unbeabsichtigten Herausziehen aufbringt.

Dies kann beispielsweise dadurch erreicht werden, dass auf der Oberfläche des Federarmes 121, eine Struktur ausgebildet ist, die die Reibung zwischen dem Federarm 121 und der jeweiligen Leitung des mehrpoligen Anschlusskabels erhöht. Optional ist es ebenfalls möglich, dass das jeweilige Kabel durch den Federarm 121 in dem U-förmigen Verbindungsstück 124, welches die Verbindung zur Kontaktverbindung 210 herstellt, eingeklemmt wird, so dass es entgegen einer Einschubrichtung R nicht bewegbar ist oder nur bewegbar ist, wenn der Federarm 121 weggedrückt wird. Ein solches Einklemmen bewirkt eine Arretierung. Beim Herausnehmen des Anschlusskabels aus dem Adapter ist es in diesem Ausführungsbeispiel zunächst erforderlich, dass der Federarm 121 in die Einschubrichtung R gedrückt wird, um so die jeweilige Leitung zu lösen.

Die Figur 1B zeigt die Kabelanschlusseinrichtung 100 der Figur 1A von einer gegenüberliegenden Seite, sodass die Federklemmenstruktur 120 mit insgesamt drei Federklemmen 120a, 120b, 120c sichtbar ist, die durch die stabförmigen Elemente 132 kontaktiert werden. Die stabförmigen Elemente 132 sind bei diesem Ausführungsbeispiel über eine Brücke 133 miteinander verbunden, sodass bei einer Betätigung des Hebelschalters 110 beziehungsweise des Hebelarms 112 die Brücke 133 nach unten hin zu den Federklemmen 120 gedrückt wird (d.h. in die Einsetzrichtung R). In betätigtem Zustand des Hebelschalters 110 werden somit die drei gezeigten Federklemmen 120 von einem entsprechenden Kontakt 210a, 210b, 210c der Kontaktverbindung 210 getrennt und erlauben somit das Einführen des mehrpoligen Anschlusskabels in einem einzigen Arbeitsschritt.

Die Fig. 1C zeigt einen vergrößerten Ausschnitt eines Adapters 200 (die weiteren Details des Adapters werden in den Figuren 3A - 3I gezeigt), wobei die Kabelanschlusseinrichtung 100 in einem nur teilweise sichtbaren Gehäuse 205 des Adapters 200 eingesetzt ist. Das Gehäuse 205 umfasst drei Öffnungen: eine erste Öffnung 201, eine zweite Öffnung 202 und eine dritte Öffnung 203, in die ein dreipoliges Anschlusskabel einsetzbar ist. Das Gehäuse 205 kann beispielsweise ein Oberdeck und ein Unterdeck aufweisen, wobei in der Fig. 1C das Oberdeck abgenommen wurde und lediglich das Unterdeck sichtbar ist.

Das Gehäuse 205 weist zumindest einen Vorsprung 216 (oder Hacken) an einer Stirnfläche des Gehäuses 205 auf, um damit einen Anschlag für den Hebelschalter 110 zu bieten. Darüber hinaus ist der Hebelschalter 110 mit der Stützstruktur 114, die in der Figur 1C nicht sichtbar ist, durch ein Stützelement 214 (oder Stützstruktur) abgestützt, sodass der Hebelarm 110 aufgrund der Kombination des Vorsprungs 216 und des Stützelements 214 in dem Gehäuse 205 zurück gehalten wird und sich lediglich in die Einschubrichtung R bewegen bzw. drehen kann. Der Vorsprung 216 greift dabei in die stufenförmige Vertiefung 116 des Hebelschalters ein und blockiert eine vertikale Richtung (gegen die Federspannung).

Das Stützelement 214 und der Vorsprung 216 bilden somit Haltemittel, die einen Anschlag und einen Drehpunkt für den Abstützabschnitt 114 definieren, sodass der Hebelarm 112 entgegen der Federkraft durch den Vorsprung 216 und durch den Stützabschnitt 214 im Gehäuse 205 gehalten wird, wenn beispielsweise das Oberdeck abgenommen wird (wie es in der Fig. 1C gezeigt ist). Der Hebelschalter 110 nimmt daher beim Lösen (oder in nichtgedrückten Zustand) durch die Federkraft der Federklemmenstruktur 120 eine Nullstellung an, bei der das Anschlusskabel mit den zumindest zwei Polen in den Öffnungen 201, 202, 203 gehalten wird.

Daher bleibt der Hebelschalter 110 stets fest im Unterdeck-Element 240 durch den Vorsprung 216 und das Stützelement 214 verankert, auch wenn das Oberdeck-Element 260 gelöst ist, weil zum Lösen und Entfernen des Oberdeck-Elementes zunächst die Anschlusskabel aus den Öffnungen 201, 202, 203 herausgenommen werden müssen und die Federarme 121 gegen die Abstützstäbe 132 drücken und die wiederum gegen den Hebelschalter 110.

Die Fig. 1D zeigt den gleichen Teilabschnitt des Adapters 200, wie er in der Figur 1C zu sehen ist, wobei in der Fig. 1D der Hebelschalter 110 betätigt wurde, sodass der Hebelarm 112 sich in der Ansicht der Fig. 1D nach unten (in die Einschubrichtung R) bewegt hat und die stufenförmige Vertiefung 116 am Hebelschalter 110 sich von dem Vorsprung 216 gelöst hat und gleichzeitig die Verbindungsstruktur 130 mit den stabförmigen Elementen 132 sich entlang der Bewegungsrichtung des Hebelarms 112 in die Einschubrichtung R bewegt haben. Bei dieser Hebelbewegung dient das Stützelement 214 als eine Stütze für die Abstützstruktur 114, sodass der Hebelarm 112 einen Hebel bildet und an dem Hebelpunkt P die Hebelkraft die Verbindungsstruktur 130 nach unten bewegt.

Die Fig. 2A und 2B zeigen das Einsetzen des mehrpoligen Anschlusskabels 300 in den Adapter 200. Bei dem Ausführungsbeispiel wie es in der Fig. 2 gezeigt ist, weist das mehrpolige Anschlusskabel 300 drei Leitungen für beispielsweise drei Phasen auf, d.h. eine erste Leitung 301, eine zweite Leitung 302 und eine dritte Leitung 303. Der Adapter 200 umfasst das Gehäuse 205 mit den drei Öffnungen 201, 202, 203, die die drei Leitungen 301, 302, 303 beim Einsetzen aufnehmen, wobei die erste Leitung 301 in die erste Öffnung 201, die zweite Leitung 302 in die zweite Öffnung 202 und die dritte Leitung 303 in eine dritte Öffnung 303 des Adapters 200 eingesetzt werden. Die Öffnungen 201, 202 und 203 in dem Gehäuse 205 definieren die dazu senkrechte Einsetzrichtung R des mehrpoligen Anschlusskabels 300 in den Sammelschienen-Adapter 200.

Außerdem weist das Gehäuse 205 eine weitere Öffnung 207 für den Hebelarm 112 auf, der aus der weiteren Öffnung 207 des Adapters 200 herausragt, so dass der Nutzer durch ein Betätigen des Hebelarmes 112 (beispielsweise durch ein Drücken in die Einschubrichtung R) die drei Leitungen 301, 302 und 303 durch die Kabelanschlusseinrichtung 100 (die in der Fig. 2A nicht zu sehen ist) kontaktieren kann.

Die Fig. 2B zeigt das Resultat nach dem Einsetzen des mehrpoligen Anschlusskabels 300 in den Adapter 200, wobei die drei Leitungen 301, 302 und 303 vollständig in die drei Öffnungen 201, 202 und 203 eingesetzt wurden.

Der Adapter 200, wie er in den Fig. 2A und 2B zu sehen ist, weist außerdem ein Unterdeck-Element 240 und ein Oberdeck-Element 260 auf, wobei die beiden Deck-Elemente 240, 260 lösbar miteinander verbindbar sind. Das Unterdeck-Element 240 umfasst Befestigungselemente 222 zum Befestigen des Adapters 200 an Sammelschienen, wobei der in den Figuren dargestellte Adapter 200 ein Adapter für ein 3-poliges System ist, so dass insgesamt 3 Befestigungselemente 222 zum Befestigen an insgesamt 3 Kontaktverbindungen für Sammelschienen vorgesehen sind. Das Oberdeck-Element 260 umfasst in Längsrichtung (vertikal in Fig. 2A) verlaufende Haltestege 480, auf denen eine Tragschiene 600 befestigt ist, die in unterschiedlicher Position an dem Oberdeck-Element 260 angebracht werden kann und der Aufnahme von elektrischen Geräten, insbesondere von elektrischen Installationsgeräten, wie beispielsweise Schaltersicherungseinheiten, dient. Weitere Details für das Oberdeck 260 und Unterdeck 240 sind nicht dargestellt, da sie für das Verständnis der vorliegenden Erfindung nicht von Bedeutung sind.

Bei dem Ausführungsbeispiel der Fig. 2 weist das Anschlusskabel 300 einen Stecker 310 auf, der die beispielhaften drei Leitungen in einem vorbestimmten Abstand parallel voneinander hält. Der Stecker 310 ist beispielsweise derart ausgebildet, dass die drei Leitungen in isolierter Form parallel auf einer Seite des Steckers einlaufen und nach einem Passieren auf der gegenüberliegenden Seite des Steckers 310 diesen wieder verlassen. Der Stecker 310 ist in einem vorbestimmten Abstand D von einem Ende der drei Leitungen angeordnet, so dass bei einem Einsetzen der Leitungen in den Adapter 200 der Stecker 310 das Gehäuse 205 des Adapters 200 kontaktiert und dadurch dem Nutzer anzeigt, dass das Anschlusskabel 300 vollständig eingesetzt ist.

Außerdem weisen die Leitungen an ihren Endpunkten jeweils einen freigelegten Abschnitt L auf, der ausgebildet ist, um bei einem Einführen des Kabels in die Kabelanschlusseinrichtung 100 durch die Federklemmen 120 kontaktiert zu werden. Vorteilhafterweise ist die Längsausdehnung des freigelegten Abschnittes L so bemessen, dass die Kontaktierung mit den Federklemmen 120 entlang des freigelegten Abschnittes L ermöglicht wird, der freigelegte Abschnitt L nach dem Einsetzen aber von außen nicht kontaktierbar ist. Beispielsweise können die drei Leitungen in einer Ebene mit gleichen Abständen voneinander angeordnet sein.

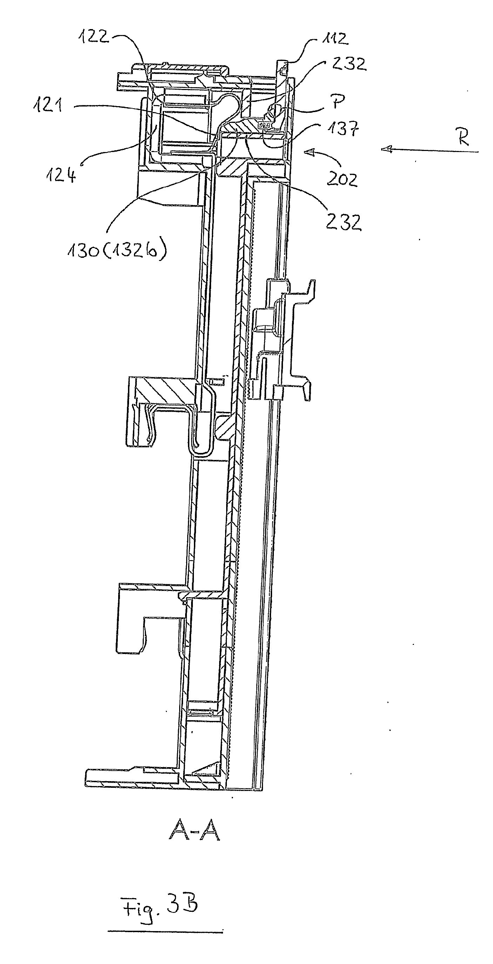

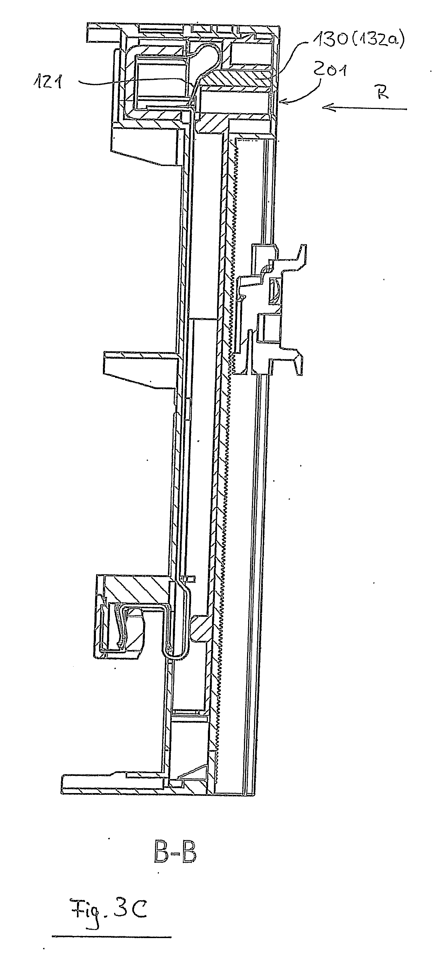

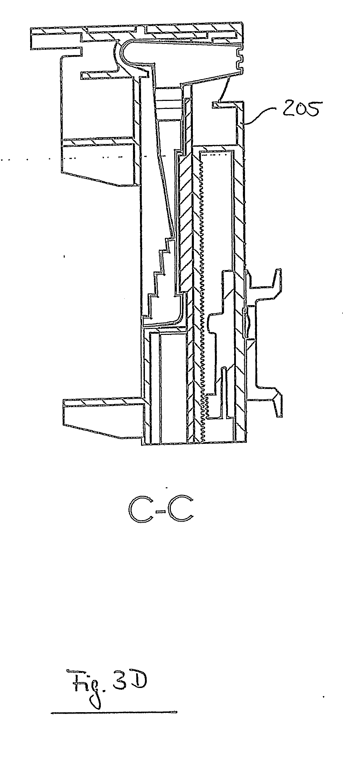

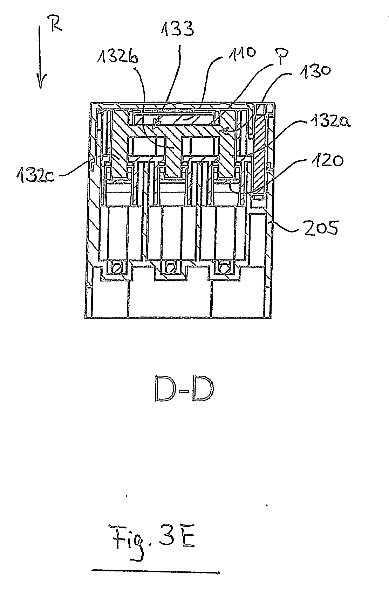

Die Fig. 3A bis 3I zeigen verschiedene Querschnittsansichten des Adapters 200, wobei eine erste Querschnittsansicht sich auf die Schnittebene A-A bezieht (siehe Fig. 3B), eine zweite Querschnittsansicht sich auf die Schnittebene B-B (siehe Fig. 3C), eine dritte Querschnittsansicht sich auf die Schnittebene C-C (siehe Fig. 3D) und eine vierte Querschnittsansicht sich auf die Schnittebene D-D (siehe Fig. 3E) bezieht. In der Fig. 3A sind ferner die erste Öffnung 201, die zweite Öffnung 202 und die dritte Öffnung 203 gezeigt, wobei die zweite Öffnung 202 zwischen der ersten Öffnung 201 und der dritten Öffnung 203 angeordnet ist und die erste bis dritte Öffnungen 201 bis 203 ausgebildet sind, um die erste bis dritte Leitung 301, 302, 303 des mehrpoligen Anschlusskabels 300 aufzunehmen.

Die Fig. 3B zeigt die Querschnittsansicht entlang des Querschnitts A-A, der sich entlang der Einschubrichtung R und durch die zweite Öffnung 202 zwischen der ersten Öffnung 201 und der dritten Öffnung 203 erstreckt.

Wie die Fig. 3B zeigt, weist die Federklemme 120 einen ersten Arm 121 und einen zweiten Arm 122 auf und die zweite Öffnung 202 erstreckt sich bis hin zu dem ersten Federarm 121 der Federklemme 120, während der zweite Arm der Federklemme 122 mit dem U-förmigen Verbindungsstück 124 verbunden ist und von dem U-förmigen Verbindungsstück abgestützt wird. Beim Betätigen des Hebelarmes 112 wird ein zweiter der drei stabförmigen Elemente 132b der Verbindungsstruktur 130 in die Einschubrichtung R heruntergedrückt und der erste Federarm 121 in die Einschubrichtung R wegdrückt, um so eine Öffnung für die zweite Leitung 302 des mehrpoligen Anschlusses 302 bereitzustellen. Die Fig. 3B zeigt ferner, dass der Hebelschalter 110 die Verbindungsstruktur 130 an dem Hebelpunkt P koppelt, so dass beim Betätigen des Hebelarmes 112 durch den Nutzer eine Kraft auf den Hebelpunkt P wirkt, die an die Federklemme 120 weitergeleitet wird. Die Verbindungsstruktur 130 wird in den Adapter 200 durch eine Führungsstruktur 232 parallel zur Einschubrichtung R geführt. Außerdem kann zwischen der Verbindungsstruktur 130 und dem Hebelschalter 110 eine Druckfeder 137 angeordnet sein, die die Verbindungsstruktur 130 und den Hebelschalter 110 gegeneinander vorspannt, so dass sie niemals locker sitzen und der Hebelschalter 110 in eine Nullstellung gedrückt wird.

Die Fig. 3C zeigt eine Querschnittsansicht entlang der Querschnittslinie B-B und erstreckt sich durch die erste Öffnung 201. Entlang dieser Querschnittsebene ist der Hebelarm 112 nicht sichtbar, sondern es ist lediglich ein erstes stabförmiges Element 132a der Verbindungsstruktur 130 sichtbar, welches wiederum mit der ersten Federklemme 121 koppelt und diese bei Betätigung des Hebelschalters 110 in die Einschubrichtung R drückt. Somit wird gleichzeitig zu dem Öffnen des zweiten Kontaktes für die zweite Leitung 302 ebenfalls der erste Kontakt für die erste Leitung 301 geöffnet, und zwar durch ein einmaliges Betätigen des Hebelarmes 112 durch den Nutzer.

Die Fig. 3D zeigt eine Querschnittsansicht entlang der Querschnittsebene C-C, die sich lateral außerhalb der drei Öffnungen 201, 202 und 203 befindet und somit nicht den Kontaktanschluss in dem Adapter 200 zeigt.

Die Fig. 3E zeigt eine Querschnittsansicht entlang der Querschnittslinie D-D (siehe Fig. 3A), die senkrecht zu den Querschnittsebenen A-A, B-B, C-C angeordnet ist, und keine der drei Öffnungen 201, 202, 203 erfasst, sondern sich in der Erstreckungsebene der Verbindungsstruktur 130 erstreckt. Daher ist die Hebelschalter 110 lediglich entlang des Hebelpunktes P in der Fig. 3E gezeigt. Die Verbindungsstruktur 130 weist eine Brücke 133 auf, die das erste stabförmige Element 132a, das zweite stabförmige Element 132b und ein drittes stabförmiges Element 132c miteinander verbindet, wobei der Hebelpunkt P für den Schalthebel 110 als eine Linie entlang einer Oberfläche der Brücke 133 gebildet wird. Somit werden alle drei Verbindungstäbe 132 (stabförmige Elemente) gleichzeitig beim Betätigen des Hebels in die Einschubrichtung R nach unten drückt, so dass gleichzeitig alle drei Kontakte geöffnet werden, um dadurch das Aufnehmen der Leitungen des mehrpoligen Verbindungskabels 300 zu ermöglichen. In der Fig. 3E ist die Federklemme 120 lediglich in einem Querschnitt gezeigt, und zwar in jenem Bereich, in dem die Federklemmen 120 die stabförmigen Elemente 132a, 132b, 132c kontaktieren.

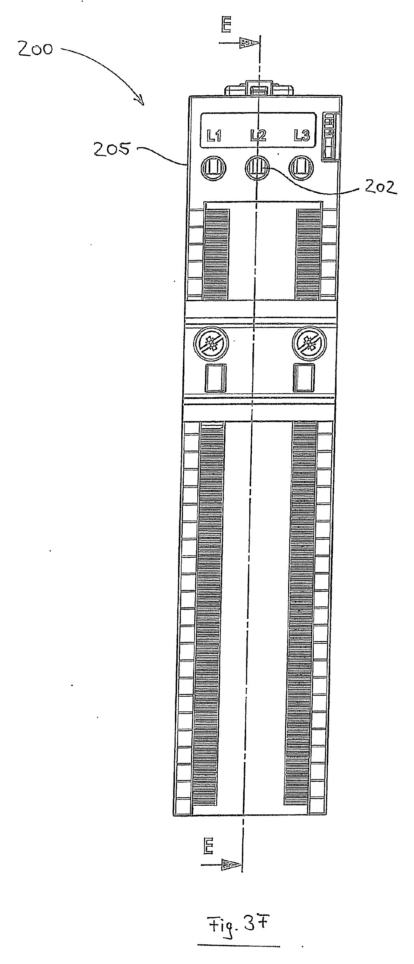

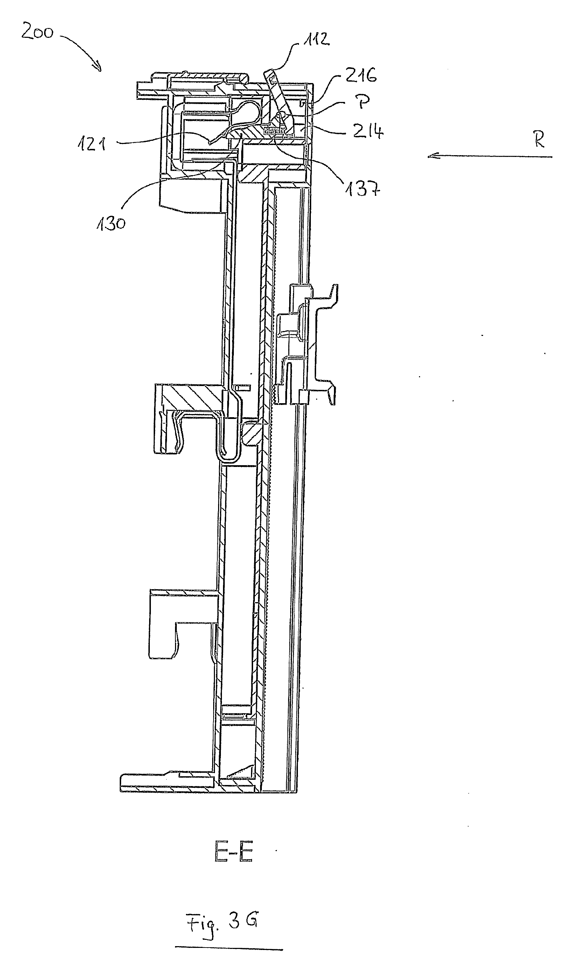

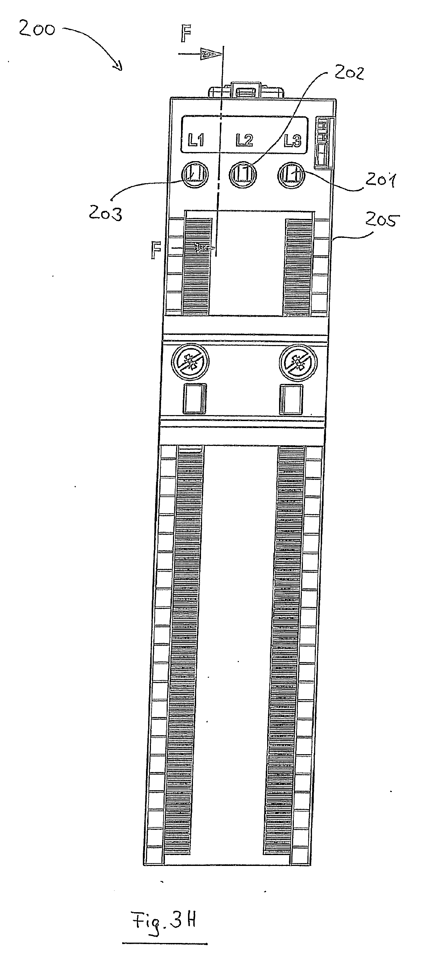

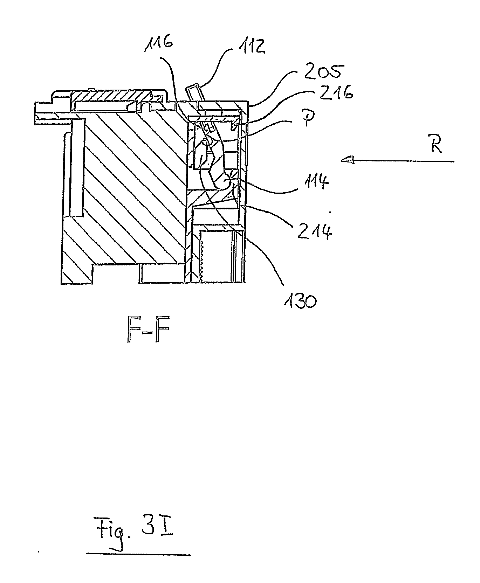

Die Fig. 3F und 3H zeigen weitere Draufsichten des Adapters 200, bei der eine Schnittlinie E-E und eine Schnittebene F-F definiert sind, wobei die entsprechende Schnittdarstellungen in der Fig. 3G und 3I zu sehen sind. Im Unterschied zu der Schnittdarstellung der Fig. 3A, 3B ist der Hebelschalter 110 in der Fig. 3F - 3I in der gedrückten Darstellung gezeigt, sodass der Hebelarm 112 in der Schnittdarstellung der Fig. 3G und 3I nach links bewegt ist. Durch das Drücken des Hebelarmes 112 wird somit die Verbindungsstruktur 130 durch die Hebelkraft, die auf den Hebelpunkt P einwirkt, in die Einschubrichtung R bewegt und drückt dadurch die Federklemmenstruktur 120 zusammen, sodass die Öffnungen zur Aufnahme des mehrpoligen Anschlusskabels geöffnet sind (vgl. Figur 3G mit Figur 3B, wo die Federklemmenstruktur die Öffnung blockiert). Die Fig. 3G und 3I zeigen ferner den Vorsprung 216 als Teil des Haltemittels, der als Haken an dem Gehäuse 205 ausgebildet ist und im gedrückten Zustand des Hebelarms 112 nicht mit dem Hebelschalter in Kontakt ist. Außerdem zeigen die Fig. 3G und 3I das Stützelement 214, das ebenfalls mit dem Gehäuse 205 verbunden ist und in Kontakt mit dem Hebelschalter 110 steht, um einen Drehpunkt bereitzustellen, sodass die Hebelkraft des Hebelschalters 110 an dem Hebelpunkt P einwirkt.

Nach einem Lösen des Hebelschalters 110 bewegt sich der Hebelarm 112 entgegen der Einschubrichtung R (nach rechts) bis der Hebelarm 112, beispielsweise durch die stufenförmige Vertiefung 116, wieder an dem Vorsprung 216 anschlägt und in dieser Stellung (Nullstellung) fixiert bleibt.

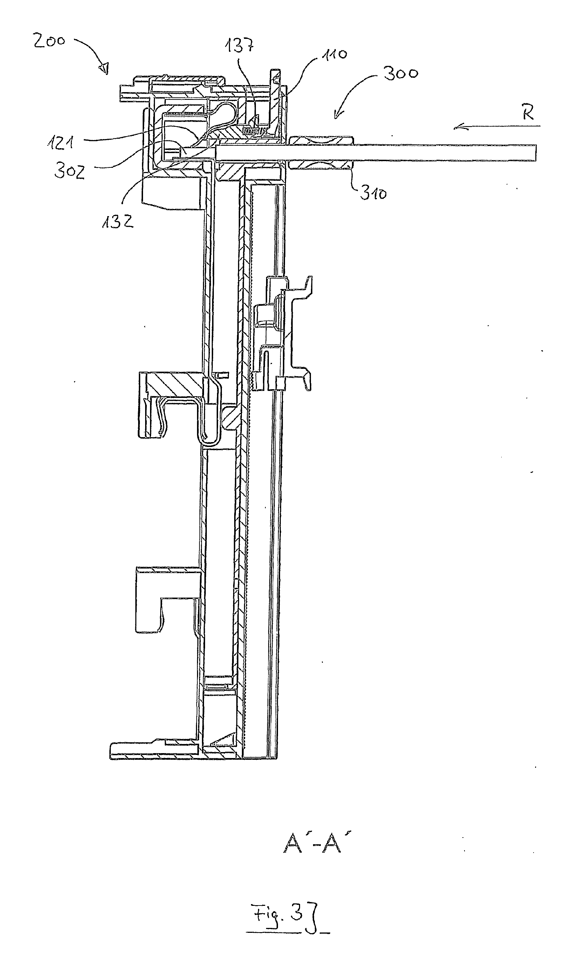

Fig. 3J zeigt ein weiteres Ausführungsbeispiel, bei dem eine Druckfeder 137 eine Rückstellkraft für den Hebelschalter 110 für den Fall bereitstellt, wenn die Leitungen 301, 302, 303 eingesteckt sind. Konkret ist in der Fig. 3J wiederum eine Schnittdarstellung in der Schnittebene A-A wie in der Fig. 3B gezeigt, aber mit eingesetztem Anschlusskabel 300 und von daher als A'-A' bezeichnet ist. Da in diesem die Federarme 121 keinen Federdruck mehr auf die Abstützstäbe 132 und weiterführend auf den Hebelschalter 110 ausüben können, wären der Hebelschalter 110 und die Abstützstäbe 132 gegeneinander in einem gelockerten Verbund. Dieser Umstand könnte insbesondere unter Resonanzschwingungen zu einem Klappergeräusch führen. Aus diesem Grunde sitzt zwischen den Abstützstäben 132 und dem Hebelschalter 110 vorteilhafterweise eine schwach ausgelegte Druckfeder 137, die den Hebelschalter 110 stets nach oben drückt (d.h. entgegen der Einschubrichtung R in die Nullstellung). Die Druckfeder 137 kann beispielsweise in einer Vertiefung (z.B. ein Sackloch) der Abstützstäbe 132 eingebracht sein.

Die in der Beschreibung, den Ansprüchen und den Zeichnungen offenbarten Merkmale der Erfindung können sowohl einzeln als auch in beliebigen Kombinationen für die Verwirklichung wesentlich sein.

## Patentansprüche

1. Adapter (200) zum Kontaktieren von Sammelschienen mit einem Anschlusskabel (300), wobei das Anschlusskabel (300) zumindest zwei Pole (301, 302) aufweist, mit folgenden Merkmalen:
zumindest zwei Kontaktverbindungen (210) für zumindest zwei Sammelschienen;
ein Gehäuse (205) mit Haltemitteln (214, 216) und zumindest zwei Öffnungen (201, 202), um durch jede der zumindest zwei Öffnungen (201, 202) jeweils einen Pol des Anschlusskabels (300) aufzunehmen;
eine Kabelanschlusseinrichtung (100), die in dem Gehäuse (205) durch die Haltemittel (214, 216) fixiert ist, wobei die Kabelanschlusseinrichtung (100) folgendes aufweist:
einen Hebelschalter (110) mit einem Hebelpunkt (P), auf dem beim Betätigen des Hebelschalters (110) eine Hebelkraft wirkt;
eine Federklemmenstruktur (120), die zumindest eine Federkraft bereitstellt, um nach einem Einsetzen des Anschlusskabels (300) jeweils einen elektrischen Kontakt zwischen einem der zumindest zwei Pole (301, 302) und einer der zumindest zwei Kontaktverbindungen (210) durch die Federkraft herzustellen; und
eine Verbindungsstruktur (130), die zwischen dem Hebelschalter (110) und der Federklemmenstruktur (120) angeordnet ist und ausgebildet ist, um die Hebelkraft von dem Hebelschalter (110) auf die Federklemmenstruktur (120) zu übertragen und die Federklemmenstruktur (120) entgegen der Federkraft zu spannen, so dass durch ein einmaliges Betätigen des Hebelschalters (110) die zumindest zwei Pole (301, 302) des Anschlusskabels (300) gleichzeitig in die Kabelanschlusseinrichtung (100) einführbar sind und bei einem Lösen des Hebelschalters (110) der jeweilige elektrische Kontakt zwischen den zumindest zwei Kontaktverbindungen (210) und den zumindest zwei Polen (301, 302) aufgrund der Federkraft hergestellt ist.

2. Adapter (200) nach Anspruch 1, wobei die Verbindungsstruktur (130) einteilig ausgebildet ist und zumindest zwei stabförmige Elemente (132) aufweist, wobei die zumindest zwei stabförmigen Elemente (132) ausgebildet sind, um beim Einwirken der Hebelkraft die Federklemmenstruktur (120) zu kontaktieren und durch ein Übertragen der Hebelkraft zu spannen, so dass ein eingesetztes Anschlusskabel (300) aus der Kabelanschlussvorrichtung (100) herausziehbar ist.

3. Adapter (200) nach Anspruch 1 oder Anspruch 2, wobei der Hebelschalter (110) einen Hebelarm (112) zum Betätigen durch einen Nutzer und einen Abstützabschnitt (114) aufweist, wobei der Hebelpunkt (P) zwischen dem Hebelarm (112) und dem Abstützabschnitt (114) angeordnet ist und der Abstützabschnitt (114) an die Haltemittel (214) koppelt, um einen Drehpunkt zu definieren, so dass bei Betätigung des Hebelschalters (110) durch den Nutzer die Hebelkraft an dem Hebelpunkt (P) als Folge einer Drehung um den Drehpunkt wirkt.

4. Adapter (200) nach Anspruch 3, wobei der Hebelschalter (110) eine stufenförmige Vertiefung (116) aufweist und die Haltemittel einen Vorsprung (216) und ein Stützelement (214) aufweisen, die ausgebildet sind, um durch die Federkraft den Hebelschalter (110) mit der stufenförmigen Vertiefung (116) gegen den Vorsprung (216) und mit dem Abstützabschnitt (114) gegen das Stützelement (214) zu drücken, um so einen Anschlag für den Hebelschalter (110) in dem Gehäuse (205) zu bilden.

5. Adapter (200) nach einem der vorhergehenden Ansprüche, wobei das Gehäuse (205) ein Unterdeck (240) und ein abnehmbares Oberdeck (260) aufweist und die Haltemittel (214, 216) an dem Unterdeck (240) ausgebildet sind.

6. Adapter (200) nach einem der vorhergehenden Ansprüche, wobei die Federklemmenstruktur (120) zumindest eine Federkraft bereitstellt, die ausreichend ist, um das Anschlusskabel (300) in dem Sammelschienen-Adapter (200) entgegen einer Zugkraft selbständig zu halten.

7. Adapter (200) nach einem der vorhergehenden Ansprüche, wobei die Federklemmenstruktur (120) ausgebildet sind, um nach einem Einführen des Anschlusskabels (300), das Anschlusskabel (300) zu verkeilen, um ein Herausziehen des Anschlusskabels (300) aus der Kabelanschlusseinrichtung (100) zu blockieren.

8. Adapter (200) nach einem der vorhergehenden Ansprüche, wobei die Federklemmenstruktur (120) jeweils eine Blattfeder und eine U-geformte Kontaktverbindung (124) mit zwei Schenkeln (125, 126), die einander gegenüber liegen, aufweist, wobei die jeweils eine Blattfeder an einem der Schenkel (125) derart fixiert ist, dass die Federkraft zumindest teilweise in Richtung des anderen Schenkels (126) wirkt, um die zumindest zwei Pole des Anschlusskabels (300) durch die Blattfeder und den anderen Schenkel (126) zu kontaktieren.

9. Adapter (200) nach einem der vorhergehenden Ansprüche, wobei das Gehäuse (205) weiter eine Seitenöffnung (207) aufweist und der Hebelschalter (110) einen Hebelarm (112) aufweist, der aus dem Gehäuse (205) durch die Seitenöffnung (207) ragt, und wobei die zumindest zwei Pole (301, 302) drei Pole sind und die Federklemmenstruktur (120) drei voneinander elektrisch isolierte Federklemmen aufweist, so dass ein 3-phasiges Anschlusskabel (300) für alle Phasen gleichzeitig kontaktierbar ist.

10. Adapter (200) nach Anspruch 9, wobei die Verbindungsstruktur (130) drei stabförmige Elemente (132) umfasst, und der Adapter (200) weiter eine Führungsstruktur (232) für die drei stabförmigen Elemente (132) bereitstellt, so dass die drei stabförmigen Elemente (132) bei einer Betätigung des Hebelschalters (110) in die Einführrichtung (R) des Anschlusskabels (300) bewegbar sind.

11. Adapter (200) nach einem der vorhergehenden Ansprüche, wobei zwischen dem Hebelschalter (110) und der Verbindungsstruktur (130) eine Feder (137) ausgebildet ist, die den Hebelschalter (110) von der Verbindungsstruktur (130) wegdrückt, um den Hebelschalter (110) unter Spannung durch die Haltemittel (214, 216) im Gehäuse (205) zu halten.

12. Anschlusskabel (300) für einen Adapter (200) nach einem der Ansprüche 8 bis 11, wobei das Anschlusskabel (300) zumindest zwei Leitungen (301, 302) und einen Stecker (310) aufweist, wobei der Stecker (310) ausgebildet ist, um die zumindest zwei Leitungen in einem vorbestimmten Abstand voneinander zu halten, wobei der vorbestimmte Abstand so gewählt ist, dass die zumindest zwei Leitungen (301, 302) in die Öffnungen (201, 202) des Adapters (200) einführbar sind.

13. Anschlusskabel (300) nach Anspruch 12, wobei die zumindest zwei Leitungen (301, 302) drei Leitungen (301, 302, 303) sind, die in einer Ebene parallel angeordnet sind und der Stecker (310) ausgebildet ist, um die drei Leitungen (301, 302, 303) derart parallel in der Ebene anzuordnen, dass zwei der drei Leitungen (301, 303) von einer dazwischenliegenden Leitung (302) einen gleichen Abstand aufweisen.
